(19) Europäisches Patentamt
European Patent Office
Office européen des brevets

(11) Veröffentlichungsnummer: **0 204 961**
**B1**

(12) **EUROPÄISCHE PATENTSCHRIFT**

(45) Veröffentlichungstag der Patentschrift: **19.09.90**

(51) Int. Cl.$^5$: **B 01 F 17/46,** C 08 J 9/30

(21) Anmeldenummer: **86106223.0**

(22) Anmeldetag: **06.05.86**

(54) **Flüssige Verschäumungscompounds zur Anwendung in wässrigen Systemen, Verfahren zu deren Herstellung und deren Verwendung.**

(30) Priorität: **11.05.85 DE 3517098**

(43) Veröffentlichungstag der Anmeldung:
**17.12.86 Patentblatt 86/51**

(45) Bekanntmachung des Hinweises auf die Patenterteilung:
**19.09.90 Patentblatt 90/38**

(84) Benannte Vertragsstaaten:
**BE CH DE FR GB IT LI NL**

(56) Entgegenhaltungen:
**DE-A-2 042 499**
**DE-A-2 633 844**
**US-A-4 148 766**
**US-A-4 417 016**

(73) Patentinhaber: **Chemische Fabrik Pfersee GmbH**
**Färberstrasse 4**
**D-8900 Augsburg (DE)**

(72) Erfinder: **Singer, Heinrich**
**Brachflecken 7**
**D-8901 Horgau (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Patentanmeldung beschreibt flüssige Verschäumungscompounds zur Anwendung in wäßrigen Systemen auf der Basis von oberflächenaktiven Substanzen und Schaumstabilisatoren, wobei die vorteilhaften Eigenschaften durch die Gegenwart von Alkyloxypropylaminen erzielt werden.

Die Schaumbehandlung spielt in zunehmendem Maße bei der Ausrüstung von Textilien eine wichtige Rolle. So werden Textilien mit Schäumen schiebefest gemacht (siehe DE-OS 26 33 844), vor allem aber werden mit Hilfe von Schäumen Beschichtungen auf Textilien aufgebracht, die denselben hervorragende Eigenschaften verleihen. Zur Herstellung von verarbeitbaren Schäumen ist es dabei notwendig, den im allgemeinen verwendeten Latices neben oberflächenaktiven Substanzen auch sogenannte Schaumstabilisatoren zuzusetzen. Der Zusatz der Schaumstabilisatoren ist dabei notwendig, um einen vorzeitigen Zerfall der Schäume zu verhindern, d.h. um ein besseres Arbeiten zu gewährleisten. Als Schaumstabilisatoren werden dabei nach dem Stand der Technik vor allem Ammoniumfettseifen verwendet. Diese haben aber den Nachteil, daß sie schon kurz nach der Herstellung pastösen Charakter annehmen und somit das "Handling" mit diesen Produkten erheblich erschwert wird. Es ist daher im allgemeinen notwendig, diese Produkte vor dem Einsatz in Wärmekammern wieder zu verflüssigen, was zusätzliche Kosten verursacht. Bisherige Versuche, diese Nachteile der bekannten Schaumstabilisatoren und damit der daraus hergestellten Verschäumungscompounds zu beseitigen, sind fehlgeschlagen. Entweder haben diese Versuche, wie beim Einsatz ungesättigter Fettsäuren, von vorneherein nicht zu dem gewünschten Erfolg geführt, oder aber es sind bei der Verwendung von z.B. kurzkettigen Aminen andere Nachteile, wie Geruchsprobleme, Vergilbung oder Ausblühen (hierunter ist das Austreten der Fettseifen an die Oberfläche zu verstehen), aufgetreten.

Die Aufgabe der vorliegenden Erfindung bestand also darin, flüssige Verschäumungscompounds zu schaffen, die ein einfaches Handling ermöglichen, ohne daß andere Nachteile in Kauf genommen werden müssen.

Die vorliegende Erfindung beschreibt flüssige Verschäumungscompounds zur Anwendung in wäßrigen Systemen auf Basis von oberflächenaktiven Substanzen und Schaumstabilisatoren, die dadurch gekennzeichnet sind, daß sie Verbindungen der allgemeinen Formel

$$R—O—CH_2—CH_2—CH_2—NH_2 \quad (I),$$

in denen R einen gesättigten Alkylrest von 8 bis 14, insbesondere 10 bis 12 C-Atomen bedeutet, enthalten. Außerdem wird ein Verfahren zur Herstellung derartiger flüssiger Verschäumungscompounds und deren Verwendung beansprucht.

Die Verschäumungscompounds enthalten oberflächenaktive Substanzen und den Schaumstabilisator. Die oberflächenaktiven Substanzen, die gleichzeitig eine ausgeprägte Netzwirkung besitzen, sind bekannt:

Als solche Produkte sind z.B. Polyalkylenoxidverbindungen, wie Alkylpolyglykolether (Alkylrest 8 bis 20 C-Atome), wie Isotridecanolpolyglykolether mit 2 bis 8 Ethylenoxideinheiten, Alkylphenolpolyglykolether, wie Octyl- und Nonylphenolpolyglykolether mit 2 bis 8 Ethylenoxideinheiten in sulfatierter Form sowie Gemische solcher Substanzen geeignet. Bevorzugt werden als oberflächenaktive Substanzen (Schaum erzeugende Hilfsmittel) Alkylsulfate (Alkylrest 8 bis 20 C-Atome), Alkylarylsulfonate (Alkylrest 4 bis 18 C-Atome) und Fettalkoholsulfate eingesetzt. Als Beispiele der bevorzugten Schaumhilfsmittel seien Natriumlaurylsulfat, Natriumoctadecylsulfat, das Natriumsalz der N-Methylaminoethylsulfonsäure und Triethanolamindodecylsulfat genannt.

Als Schaumstabilisatoren, die an und für sich bekannt sind, werden in diesen Compounds üblicher Weise die Ammoniumsalze gesättigter Fettsäuren mit 16 bis 18 C-Atomen verwendet. Unter dem Begriff "Ammoniumsalze" bzw. "Ammoniumfettseifen" sind dabei auch die Salze der genannten Fettsäuren mit Mono-, Di- oder Triethanolamin zu verstehen, die teilweise die Ammoniumsalze ersetzen können. Selbstverständlich ist es auch möglich, technische Fettsäuren einzusetzen, in denen auch kürzer- oder längerkettige Fettsäuren enthalten sind.

Die Nachteile dieser Verschäumungscompounds werden erfindungsgemäß durch Verbindungen der Formel (I) beseitigt. Als derartige Verbindungen seien 3-Octyloxypropylamin-(1), insbesondere aber 3-Decyl- und 3-Dodecyloxypropylamin-(1) genannt. Die Verbindungen der Formel (I) werden erfindungsgemäß in Mengen von 20 bis 60, insbesondere 25 bis 50 Gew.%, bezogen auf die Menge an Schaumstabilisator, zugesetzt.

Die erfindungsgemäßen Verschäumungscompounds enthalten die oberflächenaktiven Substanzen in Mengen von etwa 4 bis 17 Gew.%. Die Schaumstabilisatoren sind in Mengen von 2 bis 15 Gew.% zugegen. Die Menge an Verbindung der Formel (I) wurde oben bereits genannt und der Rest in diesen Verschäumungscompounds ist Wasser, vorzugsweise entmineralisiertes Wasser. Die Gesamtmenge an Aktivsubstanz, d.h. die Summe aus oberflächenaktivem Mittel und Schaumstabilisator, soll einen Wert von 30 Gew.%, insbesondere 25 Gew.% nicht übersteigen.

Die Herstellung der erfindungsgemäßen flüssigen Verschäumungscompounds gelingt in einfacher Weise dadurch, daß Wasser vorgelegt wird, dann die oberflächenaktiven Substanzen zugesetzt, die höhere Fettsäure mit dem Ammoniak neutralisiert wird, wobei bis zu einem Drittel des Ammoniaks gegen Alkanolamine ausgetauscht werden kann, und diesem Gemisch nachträglich die Verbindungen der Formel (I) zugesetzt werden.

Besonders bevorzugt ist es aber, in die vorgelegte Mischung aus Wasser, oberflächenaktiver Substanz und Fettsäure auch die Verbindung der Formel (I) zuzugeben und dann durch Zugabe von Ammoniak und gegebenenfalls Alkanolamin, die Ammoniumfettseife herzustellen. Selbstverständlich können die Verbindungen der Formel (I) auch zusammen mit dem Ammoniak in die beschriebene Mischung eingerührt werden. Unabhängig von der beschriebenen Reihenfolge wird der flüssige Verschäumungscompound durch Erwärmen der Verbindungen unter Rühren formuliert und ein pH-Wert von 9 bis 11 eingestellt.

Als Polymere in Emulsionsform sind alle bekannten synthetischen, filmbildenden Polymeren und Copolymeren geeignet, die nach dem Stand der Technik als Bindemittel für Textilmaterialien Verwendung finden und die in etwa 30 bis 70%iger wäßriger Dispersion in den Handel kommen. Genannt seien beispielsweise Polymere auf Basis von Vinylacetat, Vinyl- und Vinylidenchlorid, Ethylacrylat, Acrylnitril und 2-Ethylhexylacrylat. Da bei Copolymeren die Eigenschaften des Polymerisats dem Verwendungszweck besser angepaßt werden können, werden im allgemeinen Copolymere bevorzugt eingesetzt. Als Comonomere, die auch untereinander polymerisiert werden können, kommen dabei u.a. Ethylen, Malein- und Acrylsäure, Methylmethacrylat, Butylacrylat, Styrol, Butadien, Vinylether und 2-Hydroxyethylacrylat in Betracht.

Als besonders geeignet erweisen sich häufig solche Copolymere, die zur Vernetzung befähigte reaktive Gruppen aufweisen. Als solche reaktive Gruppen sind N-Methylolgruppen, insbesondere Carbonsäureamidmethylolgruppen zu nennen. Auch veretherte Methylolgruppen, wobei zur Veretherung Alkohole mit 1 bis 4 C-Atomen, insbesondere Methanol, verwendet werden, sind als reaktive Gruppen geeignet. Als Monomere, durch die diese Gruppen in das Copolymerisat eingeführt werden, sind insbesondere N-Additionsprodukte von Formaldehyd an Methacrylamid bzw.

Acrylamid sowie Allyl- bzw. Methallylcarbamat, wobei vorzugsweise die betreffenden Monomethylolverbindungen einpolymerisiert werden, aufzuführen. Daneben kommen z.B. mit Methanol verethertes N-Methylolacrylamid in Betracht. Von diesen Monomeren werden in der Regel 1,2 bis 10, insbesondere 2,0 bis 8 Gew.%, bezogen auf das gesamte Polymerisat, einpolymerisiert.

Die Mischungen aus oberflächenaktiver Substanz, Schaumstabilisator, Verbindungen der Formel (I) und Wasser, also die erfindungsgemäßen Verschäumungscompounds, werden dann den beschriebenen Latices von vorneherein zugesetzt, so daß eine fertige Formulierung entsteht, die jederzeit zu einem stabilen Luftschaum mit Hilfe der üblichen mechanischen Vorrichtungen, wie z.B. üblichen Mixgeräten, Schlagmaschinen, z.B. Rotormixer und ähnlichen Geräten verarbeitet werden kann. Selbstverständlich ist es auch möglich, die Verschäumungscompounds den Latices erst kurz vor der Verschäumung zuzusetzen und dann in bekannter Weise den Schaum herzustellen. Die zugesetzten Mengen an Verschäumungscompounds sind derart zu berechnen, daß sowohl von der oberflächenaktiven Substanz als auch vom Schaumstabilisator etwa 0,15 bis 3, insbesondere 0,25 bis 2 Gew.%, bezogen auf die wäßrige Polymeremulsion, in der fertigen Formulierung zugegen sind.

Die Vorteile des Gegenstandes der vorliegenden Erfindung liegen darin, daß Verschäumungscompounds zur Verfügung gestellt werden, die selbst nach monatelanger Lagerung unter üblichen Bedingungen in gießbarer, flüssiger Form vorliegen und damit auf einfache Art und Weise gehandhabt werden können. Es entfällt also mit den erfindungsgemäßen Produkten die umständliche nachträgliche Verflüssigung derartiger Produkte und es wird somit erfindungsgemäß ein lang gehegter Wunsch der Praxis erfüllt.

Beispiel 1

Die Herstellung eines Verschäumungscompounds für eine fertige Latexformulierung gelingt wie folgt:

67,5 kg entmineralisiertes Wasser,

10,0 kg technische Stearinsäure,

5,5 kg einer 35%igen wäßrigen Lösung von Dinatriumlaurylsulfosuccinamid,

11,0 kg 35%ige wäßrige Lösung von Na-Laurylsulfat und

3,5 kg 3-Dodecyloxypropylamin-(1)

werden in einem Rührkolben vorgelegt und langsam unter Rühren auf 85°C erwärmt und dann

4,0 kg 25%ige wäßrige Ammoniaklösung

zugegeben, 30 Minuten bei ca. 55°C gehalten und abgekühlt.

Der erhaltene Compound (pH-Wert ca. 10) bleibt monatelang flüssig und kann jederzeit den zur Beschichtung verwendeten Polymerlatices zugesetzt werden.

Beispiel 2

In einem Rührkolben werden 6200 ml entmineralisiertes Wasser vorgelegt und dann nacheinander

1070 g Stearinsäure,

350 g 3-Dodecyloxypropylamin-(1),

1300 g 30%ige wäßrige Lösung von Na-Octadecylsulfat und

800 g 35%ige wäßrige Lösung von Dinatriumlaurylsulfosuccinamid

zugesetzt. Diese Mischung wird unter Rühren auf 60°C aufgeheizt und dann werden langsam

375 g 25%ige Ammoniaklösung

zugegeben und die Mischung bei der genannten Temperatur 30 Minuten gerührt und abgekühlt.

Es entsteht auf diese Weise ein flüssiger Verschäumungscompound (pH-Wert ca. 9,5), der auch nach 3 Monaten noch ohne weiteres gießfähig ist.

Beispiel 3

In der gleichen Apparatur wie im Beispiel 2 werden zuerst die dort angegebene Wassermenge vorgelegt und dann

1000 g technische Stearinsaure (enthält ca. 40 Gew.% Palmitinsäure, Säurezahl 204 bis 209) und

1200 g Nonylphenolpolyglykolether mit 3 Mol Ethylenoxid je Mol Nonylphenol, sulfatiert, in Form des Na-Salzes

zugegeben und unter Rühren auf ca. 60°C aufgeheizt. Bei dieser Temperatur werden gleichzeitig

400 g 3-Decyloxypropylamin-(1),

325 g 25%ige Ammoniaklösung und

70 g Monoethanolamin

eingerührt und dann weitere 40 Minuten bei dieser Temperatur nachgerührt und abgekühlt.

Auch der so hergestellte Verschäumungscompound (pH-Wert) ca. 10,0) bleibt monatelang in flüssiger Form erhalten.

In gleicher Weise können 500 g 3-Octyloxypropylamin-(1) verwendet werden, wobei die Fließfähigkeit des Endproduktes ebenfalls für lange Zeit gewährleistet ist.

Beispiel 4

Mit Hilfe eines Küchenmixers wird ein Luftschaum (Litergewicht 230 g) folgender Zusammensetzung hergestellt:

100 Gewichtsteile einer 50%igen wäßrigen, anionischen Latexdispersion (Copolymerisat aus Butadien/Styrol 1:1) und

8 Gewichtsteile des Compounds nach Beispiel 2.

Dieser Luftschaum kann in üblicher Weise eingesetzt werden.

Beispiel 5

Eine fertige Polymerformulierung wird durch Mischen folgender Bestandteile hergestellt:

50,0 kg einer 46 gew.%igen, nichtionogenen Polymeremulsion (Copolymer aus 78 % Butylacrylat, 18 % Acrylnitril, 0,5 % Itaconsäure und 3,5 % N-Methylolacrylamid),

5,3 kg $BaSO_4$,

4,1 kg $TiO_2$,

5,6 kg Kaolin,

2,5 kg handelsübliches Aminoplastharz (mit Methanol hochverethertes Hexamethylolmelamin),

5,6 kg des Compounds nach Beispiel 1 und Rest auf 100 kg entmineralisiertes Wasser.

Diese Formulierung ist lagerbeständig und flüssig und kann jederzeit in bekannter Weise verschäumt werden.

**Patentansprüche**

1. Flüssige Verschäumungscompounds zur Anwendung in wäßrigen Systemen auf Basis von oberflächenaktiven Substanzen und Schaumstabilisatoren, dadurch gekennzeichnet, daß sie Verbindungen der allgemeinen Formel

$$R—O—CH_2—CH_2—CH_2—NH_2 \text{ (I)},$$

in denen R einen gesättigten Alkylrest von 8 bis 14, insbesondere 10 bis 12 C-Atomen bedeutet, enthalten.

2. Verschäumungscompounds nach Patentanspruch 1, dadurch gekennzeichnet, daß sie die Verbindungen der Formel (I) in Mengen von 20 bis 60, insbesondere 25 bis 50 Gew.%, bezogen auf die Menge an Schaumstabilisator, enthalten.

3. Verfahren zur Herstellung der Compounds nach Patentanspruch 1 und 2, dadurch gekennzeichnet, daß die Verbindungen der Formel (I) nachträglich zugesetzt werden oder vorzugsweise schon bei der Herstellung der Schaumstabilisatoren zugegen sind.

4. Verwendung der Compounds nach Patentanspruch 1 und 2 als Zusatz zu Polymerlatices, die zur Verschäumung bestimmt sind.

**Revendications**

1. Compositions liquides de moussage, destinées à servir dans des systèmes aqueux à base de substances tensio-actives et de stabilisants de la mousse, caractérisées en ce qu'elles contiennent des composés de formule générale:

$$R—O—CH_2—CH_2—CH_2—NH_2 \text{ (I)},$$

dans laquelle R représente un reste alkyle saturé comportant 8 à 14, en particulier 10 à 12, atomes de carbone.

2. Compositions de moussage selon la revendication 1, caractérisées en ce qu'elles contiennent les composés de formule (I) en quantité de 20 à 60, notamment 25 à 50, % en poids, sur la base de la quantité de stabilisants de la mousse.

3. Procédé de préparation des compositions selon la revendication 1 et la revendication 2, caractérisé en ce qu'on ajoute par la suite les composés de formule (I) ou bien avantageusement, qu'ils sont déjà présents lors de la préparation des stabilisants de la mousse.

4. Utilisation des compositions selon la revendication 1 et la revendication 2, comme additifs à des latex de polymères, destinés au moussage.

**Claims**

1. Liquid foam compounds for use in aqueous systems based on surface-active substances and foam stabilisers, characterised in that they contain compounds of the general formula

$$R—OCH_2—CH_2—CH_2—NH_2 \text{ (I)},$$

in which R represents a saturated alkyl residue of 8 to 14, especially 10 to 12, C-atoms.

2. Foam compounds according to Claim 1, characterised in that they contain the compounds of formula (I) in quantities of 20 to 60%, in particular 25 to 50%, by weight, based on the quantity of foam stabiliser.

3. Method of forming the compounds according to Claims 1 and 2, characterised in that the compounds of formula (I) are added later, or

preferably in that they are already present when the foam stabilisers are formed.

4. Use of the compounds according to Claims 1 and 2 as an additive to polymer lattices which are intended to produce foam.